# EUROPEAN PATENT SPECIFICATION

(11) **EP 0 775 469 B1**
(45) Date of publication and mention of the grant of the patent: **10.03.2004**
(21) Application number: 96308454.6
(22) Date of filing: 22.11.1996
(51) Int. Cl.: A61C 7/06, A61C 7/28

(54) **Orthodontic facebow with locking catch**
Orthodontischer Facialbogen und Versperreinrichtung dafür
Arc facial orthodontique et mécanisme de verrouillage

(30) Priority: 23.11.1995 GB 9523935
(43) Date of publication of application: 28.05.1997
(73) Proprietor: Samuels, Russell Henry Ashleigh, Quorn, Leicestershire LE12 8BN (GB)
(72) Inventor: Samuels, Russell Henry Ashleigh, Quorn, Leicestershire LE12 8BN (GB)
(74) Representative: Gibson, Stewart Harry

(56) References cited:
- EP-A- 0 312 884
- US-A- 4 038 754
- US-A- 4 212 637

## Description

This invention relates to a facebow for use in orthodontics, and also relates to a locking catch for such a facebow.

Facebows are used in orthodontics to move pairs of first or second molar teeth distally (rearwardly) in a patient's mouth, or to anchor them against movement. A metal band is cemented around each of the teeth to be moved or anchored, the band having a buccally (outwardly) projecting bracket fixed to it. The bracket has a tube directed along a line parallel to the buccal surface of the molar teeth. The facebow comprises an inner, C-shaped metal bow having opposite ends or feet which engage within the tubes of the respective brackets. In use, the inner bow extends around the outside (labial and buccal aspects) of the patient's teeth inside the mouth. The facebow also comprises an outer bow which is joined at its middle to the middle of the inner bow. The outer bow has arms which extend posteriorly (rearwardly) around the outside of the patient's cheeks. The free ends of the arms of the outer bow are provided with hooks. An elasticated or spring-loaded strap is attached to the hooks on the outer bow and passed around the back of the head and/or neck. Thus the facebow is pulled posteriorly by the strap and, because the facebow is fixed to the patient's teeth, a distal (rearward) force is applied to the teeth. Over a period of time the teeth move distally, or alternatively are held against forward movement.

The facebow is held to the teeth merely by way of the ends of the inner bow engaging within the tubes of the brackets. The tension developed by the head and/or neck strap keeps the inner bow in engagement with the brackets on both teeth. However, should the strap break or become detached from the facebow for whatever reason, then the inner bow is free to disengage from the brackets. The ends of the inner bow are relatively sharp, and could possibly penetrate the user's cheek or even an eye whilst he or she is asleep.

Facebows have been proposed which include a locking catch on each arm of the inner bow: an end portion of the locking catch snap-engages behind a projection on the bracket which is fixed to the tooth. The locking catch is effective in preventing accidental removal of the facebow. However, the locking catch must be designed to match the particular shape, size and construction of the bracket, which vary from one manufacturer to another. Also in these previously-proposed facebows, the locking catch comprises a length of wire which is soldered or welded to the arm of the inner bow, then extends forwardly from its point of attachment, loops to form a biasing spring, and then extends rearwardly to terminate as a snap-engaging catch. The locking catch is relatively short in length and therefore relatively inaccessible for the user to engage and displace for disengaging the catch to remove the facebow from the mouth.

US-A-4,212,637 discloses a facebow which includes a locking catch mounted to each arm of the inner bow and extending distally to terminate in a hook: this hooked end of the catch lies, in use, beyond the end of the respective arm.

US-A-4,038,754 discloses a facebow which includes a guard wire mounted alongside, and projecting beyond, the end of each arm of the inner bow, the end of the guard wire being formed with a loop to prevent harm to the wearer should the facebow become displaced from the orthodontic appliance.

EP-A-0,312,884 discloses a facebow which includes an elongate tab of resilient material mounted to each arm of the inner bow, the end of the tab being formed with an aperture: the tab is arranged to be stretched so that its aperture can be placed over the free end of the respective arm of the inner bow.

In accordance with this invention, there is provided a facebow which comprises an outer bow having opposite ends for attachment of a head and/or neck strap, an inner bow connected to said outer bow, the inner bow comprising two arms having free ends for insertion through tubular formations of an orthodontic appliance, said tubular formations being, in use, secured adjacent opposed teeth which are to be moved distally or restrained against forward movement, and a locking catch mounted to each arm of the inner bow and extending distally to terminate in a hook, characterised in that said hook is arranged to engage over an end portion of that arm which projects distally from the tubular formation of the orthodontic appliance.

Preferably each locking catch extends distally (rearwardly) from its point of mounting to the respective arm of the inner bow, and generally parallel to that arm.

Preferably each locking catch is formed with a spring biasing portion adjacent its point of mounting to the respective arm of the inner bow.

Preferably the locking catch is formed of a length of spring wire. Preferably this length of wire is mounted by soldering or welding to the respective arm of the inner bow.

Preferably each arm of the inner bow is formed with a loop or bight adjacent its free inner end. By using a pair of pliers or a similar tool, the orthodontist can tighten or widen this loop to adjust the effective length of the respective arm of the inner bow, or he can bend the arm at the location of this loop or bight so as to adjust the orientation of the free inner end of the arm to align accurately with the tubular formation of the bracket fixed to the tooth.

Preferably each locking catch is also formed with a loop or bight, enabling the orthodontist to adjust the effective length of the catch to correspond with adjustments made to the length of the respective arm of the inner bow.

It will be appreciated that because each locking catch engages with the arm itself of the inner bow, the facebow is relatively independent of the precise size and construction of the orthodontic appliance with which it is used. The one facebow can therefore be used with the appliances of various different manufacturers, and can particularly be used with appliances having tubular formations of a significant range of different lengths.

Embodiments of this invention will now be described by way of examples only and with reference to the accompanying drawings, in which:
FIGURE 1 is an occlusal (lower) view of an embodiment of facebow in accordance with this invention, when fitted to a set of top teeth;
FIGURE 2 is an enlarged view of the inner end of one of the arms of the inner bow of the facebow of Figure 1;
FIGURE 3 is a buccal (side) view of the inner end of the inner bow arm shown in Figure 2;
FIGURE 4 is a buccal (side) view of the inner end of the same inner bow arm, when the facebow is detached from the teeth;
FIGURE 5 is a posterior (rear) view of the inner end of the inner bow arm shown in Figure 2; and
FIGURE 6 is a view, similar to Figure 4, of a modified facebow.

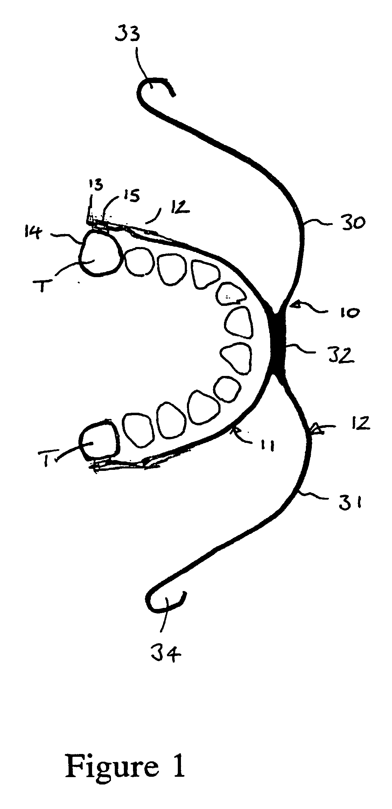

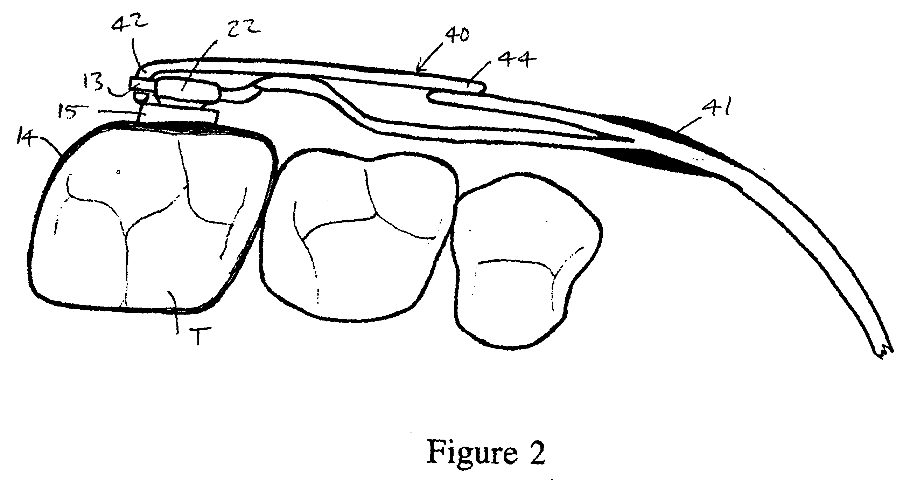

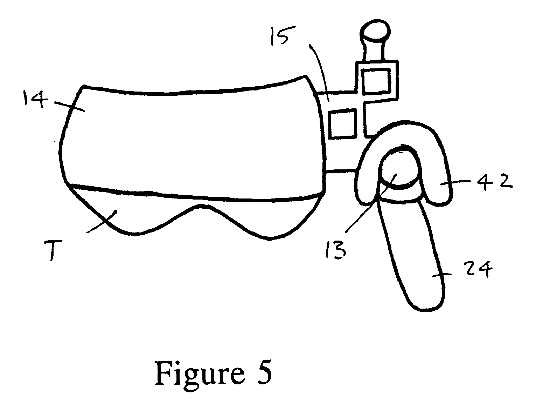

Referring to Figure 1 of the drawings, there is shown a wire facebow 10 comprising a generally C-shaped inner bow 11 connected over a middle portion to the middle portion of an outer bow 12, which has two arms 30,31 extending outwardly and rearwardly. Opposite ends of the outer bow 12 are formed into forward-facing hooks 33,34 for attachment of the ends of a head and/or neck strap (not shown). In accordance with usual practices, a metal band 14 is cemented in position around each of the teeth T which are to be moved distally (rearwardly), or alternatively to be restrained against forward movement. Each band 14 has a bracket 15 fixed to it by welding, and the band is positioned so that the bracket 15 lies to the outside of the respective tooth T. Further, and as shown more clearly in Figures 2, 3 and 5, the bracket 15 includes a tube 22 which is directed mesio-distally (forwardly) along the buccal surface of the molar teeth. Straight end portions 13 of the respective arms of the inner bow 11 are, in use, inserted through the tubes 22 of the brackets which are fixed to the opposite teeth T.

An occlusally (downwardly) projecting, U-shaped loop or bight 24 is formed adjacent the end of each arm of the inner bow 11, to enable the orthodontist to adjust the direction of the straight end portion 13 to line up with the axis of the corresponding tube 22. The loop or bight 24 can be occlusally (downwardly) or gingivally (upwardly) directed. Also the loop or bight 24 enables the orthodontist to displace the straight end portion 13 forwardly or rearwardly relatively to the remainder of the facebow.

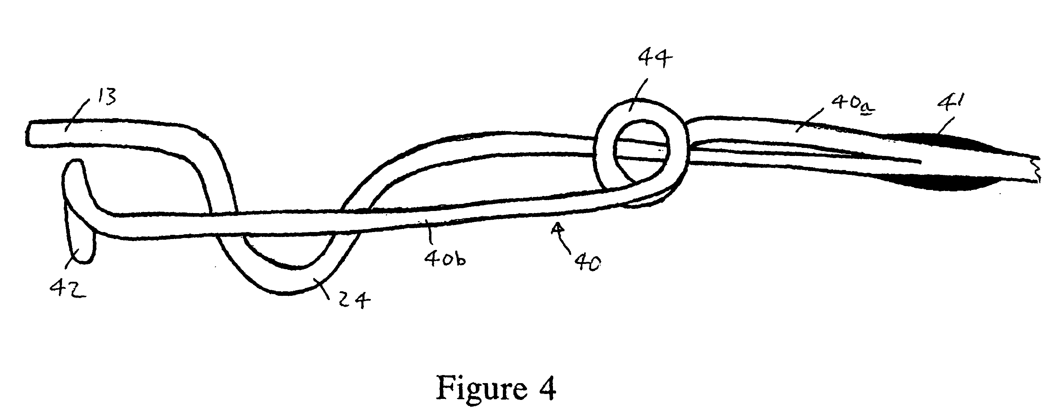

Each arm of the inner bow 11 is provided with a catch 40, which comprises a length of wire having one end soldered to the inner bow at 41, and then extending distally (rearwardly) to terminate, via a right angle bend, in a vertically directed hook 42 which is arranged so that it may be hooked over the straight end portion 13 of the inner bow. The catch 40 is bent into a helical loop 44 which forms a spring, biasing the hooked end of the catch occlusally (downwardly), as best seen in Figure 4. As shown, the catch 40 comprises a first generally straight portion 40a which extends, generally parallel to the respective arm of the inner bow, from its mounting point 41 to the helical loop 44, and then a second generally straight portion 40b which extends, again generally parallel to the respective arm of the inner bow, from the helical loop 44 to the hook 42.

In use, the inner bow 11 of the facebow is inserted into the user's mouth and the ends 13 of its two arms are inserted through the tubes 22 of the respective brackets 15. The user then displaces each of the locking catches 40, against the bias provided by its spring helical loop 44, to engage the hook 42 of the catch over the respective end 13 of the inner bow 11, where it projects from the tube 22. The occlusal biasing of the catch 40, caused by the helical loop 44, ensures that the catch remains engaged for as long as required. In order to remove the facebow, the user displaces each catch slightly, against its spring bias, to disengage it from the end of the respective arm of the inner bow, after which the inner bow can be withdrawn from the mouth.

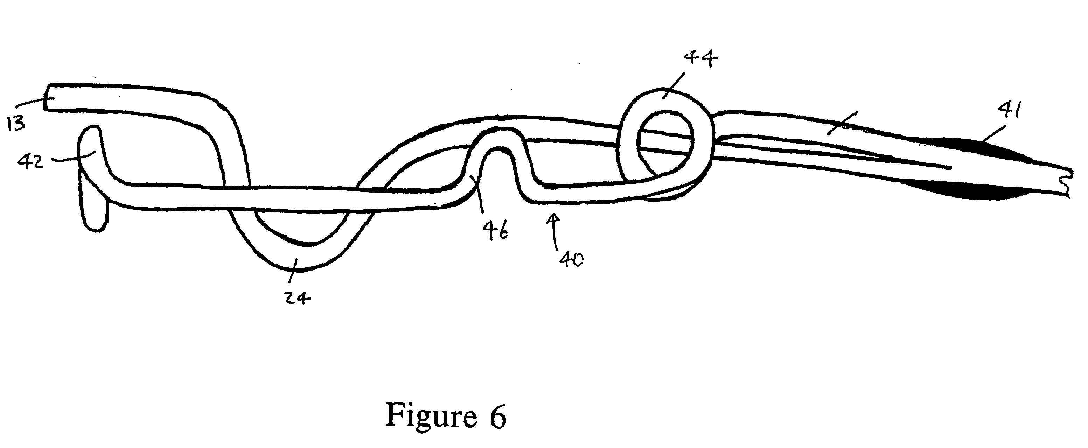

Referring to Figure 6, each locking catch 40 may be formed with a loop or bight 46 adjacent its helical loop 44, to enable the orthodontist to adjust the length of the catch, in correspondence with any alteration which he makes, using the loop 24, to the length of the respective arm of the inner bow. The bight 46 may be gingivally directed, as shown in Figure 6, or it may instead be occlusally directed.

Because each locking catch 40, in the above-described embodiments, engages the portion of the inner bow which projects from the tube 22 of the bracket 15, the facebow may be used with the brackets of various different manufacturers: in particular the length of the tubes 22 of these brackets tend to vary considerably from one manufacturer to another. Also because the catch 40 is itself relatively long, it is a simple matter for the user to engage the catch with his or her finger and displace it as necessary for engaging or disengaging the catch with the ends of the inner bow.

Whilst the facebow has been described in use with an orthodontic appliance in the form of a pair of brackets 15 fixed around an opposed pair of teeth, the facebow may be used equally well with other forms of orthodontic appliance which also include a pair of tubes which, in use, are securely positioned alongside the opposed teeth. As particular examples, the facebow may be used with removable orthodontic appliances, and with functional orthodontic appliances.

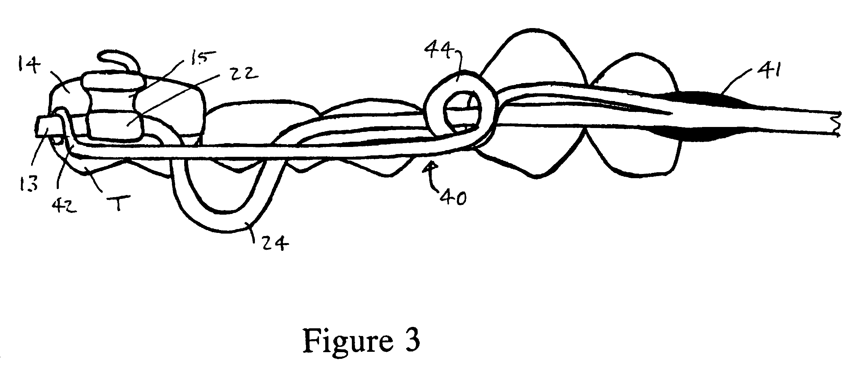

In some cases, the tubes 22 may be occlusally positioned (i.e. adjacent the occlusal surfaces of the teeth), as shown in Figure 3: in other cases, the tubes 22 may be gingivally positioned (i.e. adjacent the gums). The same facebow may however be used for the latter case, but in the opposite orientation, i.e. simply turned through 180° about its longitudinal axis: the hooked end 42 of each catch then engages over the end portion 13 of the inner bow in the gingival direction, rather than in the occlusal direction.

## Claims

1. A facebow which comprises an outer bow (12) having opposite ends for attachment of a head and/or neck strap, an inner bow (11) connected to said outer bow, the inner bow comprising two arms having free ends (13) for insertion through tubular formations (22) of an orthodontic appliance (15), said tubular formations (22) being, in use, secured adjacent opposed teeth (T) which are to be moved distally or restrained against forward movement, and a locking catch (40) mounted to each arm of the inner bow (11) and extending distally to terminate in a hook (42), **characterised in that** said hook (42) is vertically directed hook arranged to engage over an end portion (13) of that arm which projects distally from the respective tubular formation (22) of the orthodontic appliance.

2. A facebow as claimed in claim 1, **characterised in that** each locking catch (40) extends distally, from a point at which it is mounted to the respective arm of the inner bow (11), and generally parallel to that arm.

3. A facebow as claimed in claim 2, **characterised in that** each locking catch (40) is formed with a spring biasing portion adjacent said point at which it is mounted to the respective arm of the inner bow (11).

4. A facebow as claimed in any preceding claim, **characterised in that** each locking catch (40) comprises a length of spring wire.

5. A facebow as claimed in claim 4, **characterised in that** each locking catch (40) is formed with a bight (44) capable of bending to adjust the effective length of the catch.

6. A facebow as claimed in any preceding claim, **characterised in that** each arm of the inner bow (11) is formed with a bight (24) capable of bending to adjust the effective length of that arm.

## Patentansprüche

1. Facialbogen, der einen äußeren Bogen (12) mit gegenüber liegenden Enden zur Befestigung eines Kopf- und/oder Nackenriemens umfasst, einen inneren Bogen (11), der mit dem äußeren Bogen verbunden ist, wobei der innere Bogen zwei Arme mit freien Enden (13) zur Einführung durch röhrenförmige Gebilde (22) einer orthodontischen Vorrichtung (15) umfasst, wobei die röhrenförmigen Gebilde (22) beim Gebrauch angrenzend an gegenüberliegende Zähne (T) gesichert sind, die distal bewegt oder gegen eine Vorwärtsbewegung zurückgehalten werden sollen und eine Verriegelungseinrichtung (40), die an jedem Arm des inneren Bogens (11) montiert ist und sich distal erstreckt, um in einem Haken (42) zu enden, **dadurch gekennzeichnet, dass** der Haken ein vertikal gerichteter Haken ist, der angeordnet ist, um über einen Endabschnitt (13) des Armes in Eingriff zu treten, der distal von dem jeweiligen röhrenförmigen Gebilde (22) der orthodontischen Vorrichtung hervorsteht.

2. Facialbogen wie in Anspruch 1 beansprucht, **dadurch gekennzeichnet, dass** sich jede Verriegelungseinrichtung (40) distal von einem Punkt, an welchem sie an dem jeweiligen Arm des inneren Bogens (11) montiert ist und allgemein parallel zu diesem Arm erstreckt.

3. Facialbogen wie in Anspruch 2 beansprucht, **dadurch gekennzeichnet, dass** jede Verriegelungsvorrichtung (40) mit einem Federspannungsabschnitt angrenzend an den Punkt geformt ist, an welchem sie an den diesbezüglichen Arm den inneren Bogens (11) montiert ist.

4. Facialbogen wie in einem der voranstehenden Ansprüche beansprucht, **dadurch gekennzeichnet, dass** jede Verriegelungseinrichtung (40) eine Länge Federdraht umfasst.

5. Facialbogen wie in Anspruch 4 beansprucht, **dadurch gekennzeichnet, dass** jede Verriegelungseinrichtung (40) mit einer kleinen Bucht (44) geformt ist, die in der Lage ist, sich zu biegen, um die wirksame Länge der Verriegelung anzugleichen.

6. Facialbogen wie in einem der voranstehenden Ansprüche beansprucht, **dadurch gekennzeichnet, dass** jeder Arm des inneren Bogens (11) mit einer kleinen Bucht (24) geformt ist, die in der Lage ist, sich zu biegen, um die wirksame Länge dieses Armes anzugleichen

## Revendications

1. Arc facial qui comprend un arc extérieur (12) ayant des extrémités opposées destinées à la fixation d'une sangle de tête et/ou de cou, un arc intérieur (11) relié audit arc extérieur, ledit arc intérieur comprenant deux branches ayant des extrémités libres (13) destinées à être insérées à travers des formations tubulaires (22) d'un appareil orthodontique (15), lesdites formations tubulaires (22) étant fixées en utilisation dans des positions adjacentes à des dents opposées (T) qu'il s'agit de déplacer dans une direction distale ou d'empêcher d'avancer, et une attache de verrouillage (40) montée sur chaque branche de l'arc intérieur (11) et qui s'étend dans la direction distale pour se terminer par un crochet (42), **caractérisé en ce que** le ledit crochet (42) est un crochet dirigé verticalement, arrangé pour s'engager par dessus une partie d'extrémité (13) de la branche qui émerge dans la direction distale de la formation tubulaire (22) respective de l'appareil orthodontique.

2. Arc facial selon la revendication 1, **caractérisé en ce que** chaque attache de verrouillage (40) s'étend dans la direction distale à partir d'un point auquel elle est montée sur la branche respective de l'arc intérieur (11) et sensiblement parallèlement à cette branche.

3. Arc facial selon la revendication 2, **caractérisé en ce que** chaque attache de verrouillage (40) est formée avec une partie à sollicitation élastique adjacente audit point auquel elle est montée sur la branche respective de l'arc intérieur (11).

4. Arc facial selon une quelconque des revendications précédentes, **caractérisé en ce que** chaque attache de verrouillage (40) comprend une longueur de fil à ressorts.

5. Arc facial selon la revendication 4, **caractérisé en ce que** chaque attache de verrouillage (40) est munie d'une anse (44) qu'on peut plier pour ajuster la longueur effective de l'attache.

6. Arc facial selon une quelconque des revendications précédentes, **caractérisé en ce que** chaque branche de l'arc intérieur (11) est munie d'une anse (24) qu'on peut plier pour ajuster la longueur effective de cette branche.
